# EUROPEAN PATENT SPECIFICATION

(11) **EP 3 863 159 B1**
(45) Date of publication and mention of the grant of the patent: **26.02.2025**
(21) Application number: 21156059.4
(22) Date of filing: 09.02.2021
(51) Int. Cl.: H02K 5/22, H02K 5/14

(54) **CONFIGURATION FOR MOUNTING AN ELECTRONIC CONTROL BOARD TO A BRUSHED ELECTRIC MOTOR**
KONFIGURATION ZUM BEFESTIGEN EINER ELEKTRONISCHEN STEUERUNGSPLATINE AN EINEM ELEKTRISCHEN BÜRSTENMOTOR
CONFIGURATION DE FIXATION D'UNE CARTE ÉLECTRONIQUE DE COMMANDE POUR MOTEUR ÉLECTRIQUE A BALAIS

(30) Priority: 10.02.2020 IT 202000002512
(43) Date of publication of application: 11.08.2021
(73) Proprietor: DENSO THERMAL SYSTEMS S.p.A., 10046 Poirino (Torino) (IT)
(72) Inventor: BASEGGIO, Daniele, 10046 POIRINO (Torino) (IT); BERGAMO, Luca, 10046 POIRINO (Torino) (IT)
(74) Representative: Vanzini, Christian

(56) References cited:
- EP-A1- 1 793 473
- EP-A1- 2 500 574
- WO-A1-2012/126516
- GB-A- 2 445 775

## Description

This invention relates in general to electric motors applied in climate control units, more specifically to brush motors applied to electric fans.

It is known that such motors may be controlled by electronic control boards which are arranged in proximity to the motor and connected to the motor by means of electric cables. Such an arrangement may be disadvantageous from the construction and installation point of view, since it requires wiring to establish a connection between the motor and the relative electronic control board.

GB 2 445 775 A discloses a mounting configuration, in which a board holder is configured to be snap-fitted to an electric motor which may be a brushed motor. The board holder is fitted axially to the motor. EP 1 793 473 A1 discloses a brushed motor mounted to an electronic board.

An object of this invention is to provide a solution for integrating the electronic control board directly on the motor. Such a solution would make it possible to avoid the use of wiring, with a consequent reduction in costs.

The subject matter of the invention is a configuration for mounting an electronic control board on a brushed electric motor as defined in the independent claim 1.

Further embodiments of the invention are defined in the dependent claims 2 - 9.

According to the invention, the coupling face comprises a first snap tooth protruding from the coupling face and engaging an anchoring formation made on the motor head and a second snap tooth protruding from the coupling face and engaging an edge of the stator housing. This arrangement allows for a particularly effective solution for anchoring the board holder to the motor and requires only a minimum adaptation of the structure of the electric motor. In particular, said first and second tooth may be opposite to each other and facing away from each other.

According to an embodiment, the coupling face further comprises a centering formation projecting from the coupling face and configured to be inserted in a seat formed in the anchoring formation of the motor head. This arrangement makes it possible to achieve precise alignment between the board holder and the electronic board on the one hand, and the electric motor (i.e., stator housing and motor head) on the other.

Preferably, the centering formation comprises at least one longitudinal rib and at least one transverse rib oriented orthogonally to the longitudinal rib. With this arrangement it is possible to obtain an alignment between the parts with respect to two orthogonal directions.

According to an embodiment, the coupling face further comprises at least one stand projection which rests on the edge of the stator housing. In particular, said at least one stand projection may have an abutment surface which cooperates with the second snap tooth to grip a wall of the edge of the stator housing between the snap tooth and the abutment surface. Preferably, there are two abutment surfaces arranged on opposite sides of the coupling face with respect to the second snap tooth. These arrangements allow for the play/tolerances between the components to be compensated, possibly in cooperation with the other arrangements described above.

According to the invention, the coupling face further comprises at least one pair of leaf spring projections configured to engage a side surface of the stator housing. In particular, the leaf spring projections may be opposed to each other and extend from the coupling face divergently from each other. Preferably, the leaf spring projections are arranged according to an alignment direction orthogonal to an alignment direction of said first and second snap tooth. These arrangements allow for the play/tolerances between the components to be compensated, possibly in cooperation with the other arrangements described above.

Further features and advantages of the mounting configuration according to the invention will become clearer from the following detailed description of an embodiment of the invention, made in reference to the accompanying drawings, provided purely for illustrative and non-limiting purposes, wherein:
- Fig. 1 and 2 are perspective views of an electric motor according to the invention;
- Fig. 3 and 4 are perspective views showing a board holder according to the invention, with relevant electronic control board, about to be assembled to the electric motor of Fig. 1 and 2;
- Fig. 5 is a perspective view of the board holder only;
- Fig. 6 is a perspective view similar to those of Fig. 3 and 4, from which the board holder has been removed;
- Fig. 7 is a sectional view of the board holder and the electric motor about to be assembled;
- Fig. 8 and 9 are perspective views of the board holder and of the electric motor in assembled condition;
- Fig. 10 is a sectional view of the board holder and of the electric motor in assembled condition;
- Fig. 11 and 12 are sectional views similar to Fig. 10, but referring to a variant of the invention;
- Fig. 13 is a perspective view of the board holder and of the electric motor according to a variant of the invention, about to be assembled; and
- Fig. 14 is a perspective view of the board holder with the electronic control board.

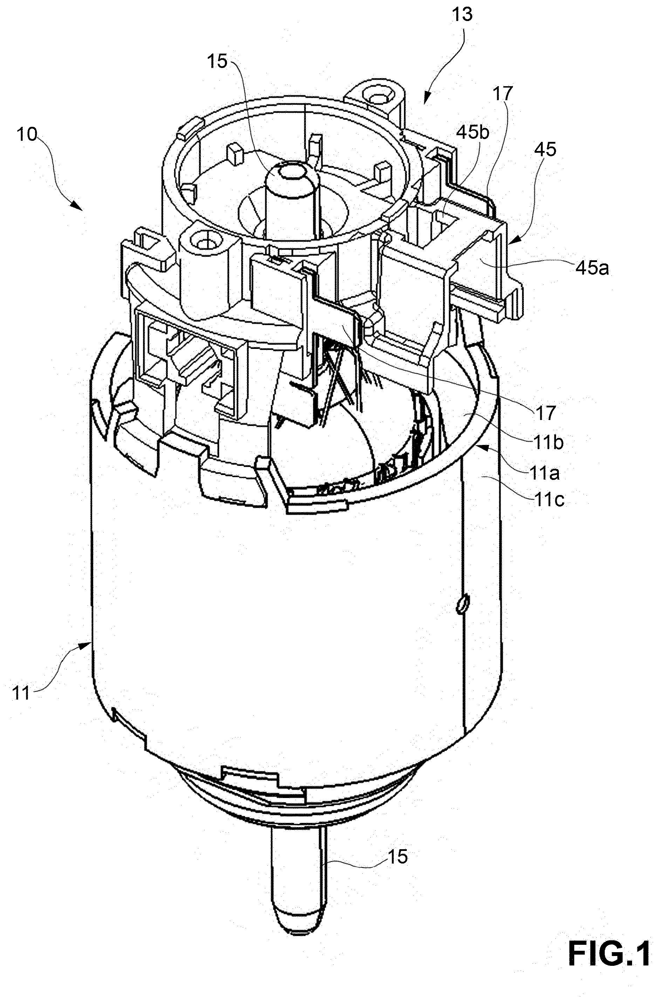

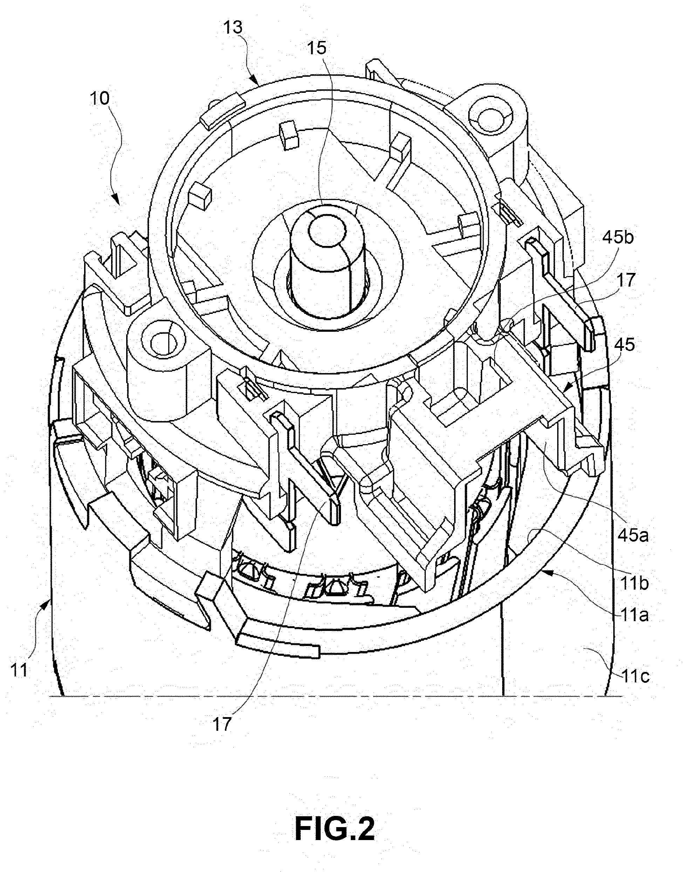

With reference to Fig. 1 and 2, a brushed electric motor 10 is shown. Overall, it is a conventional brushed electric motor, comprising a stator with permanent magnets and a rotor provided with windings which are powered by means of brushes.

The figures show a cylindrical stator housing, indicated with 11 and made of metallic material, which supports the magnets and forms a magnetic circuit for the electric motor. In the illustrated example, the stator housing 11 has the shape of a cylinder or prism with a circular cross section, but more generally it could have the shape of a cylinder or prism with a more complex-shaped cross section.

The figures also show a motor head made of plastic material, indicated with 13 and fixed to the stator housing 11. The motor head 13 provides at one end of the electric motor 10 support for a shaft 15 of the electric motor 10. The motor head 13 also carries the brushes, the relevant brush holders, and therefore also the motor terminals 17 which are connected to the brushes. In the illustrated example, the terminals 17 are formed as male terminals, and are two in number.

As will be clarified below, the motor head 13 is adapted to allow direct mounting of an electronic control board.

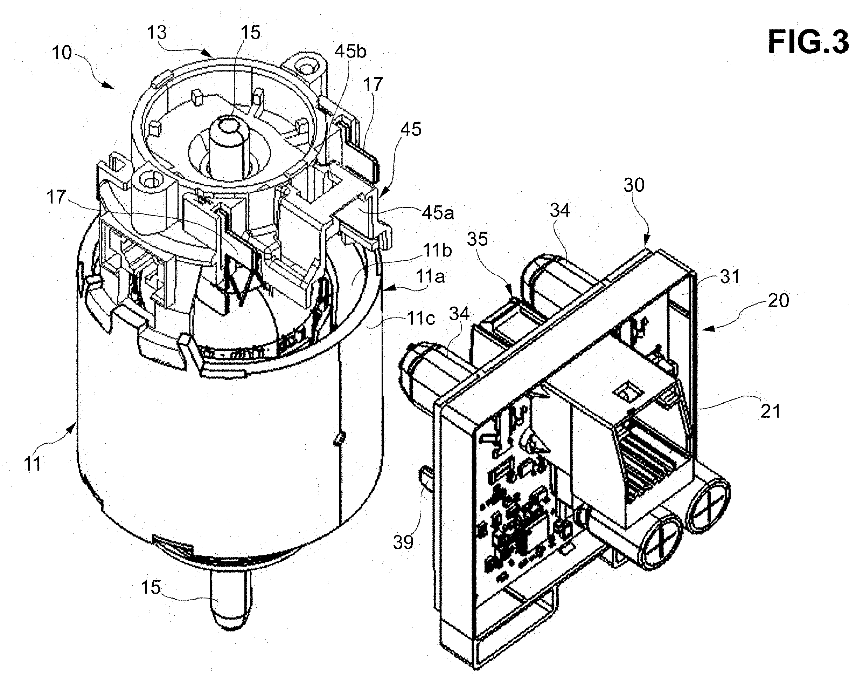

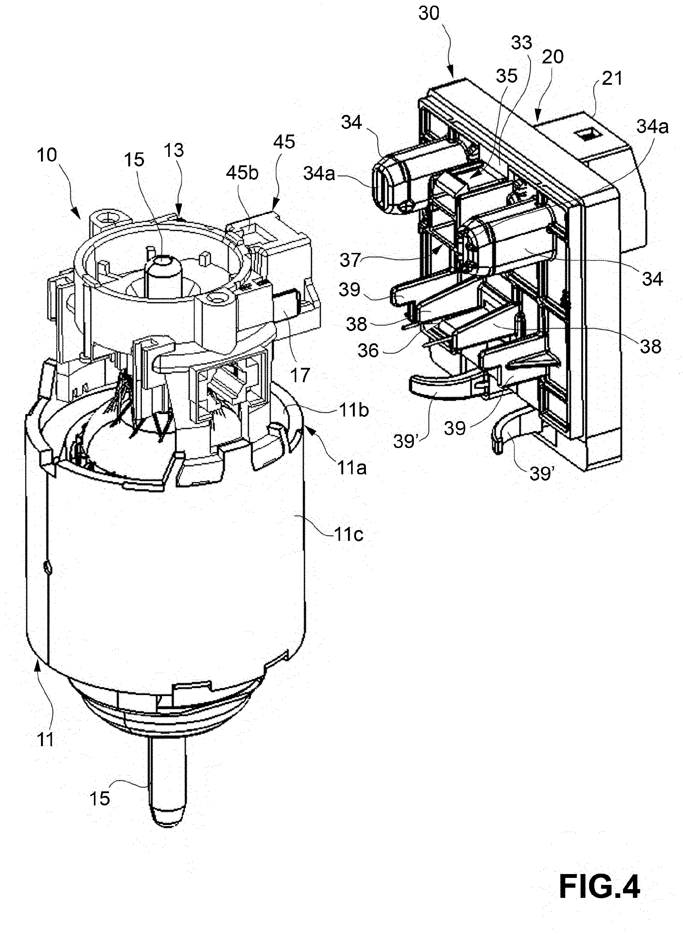

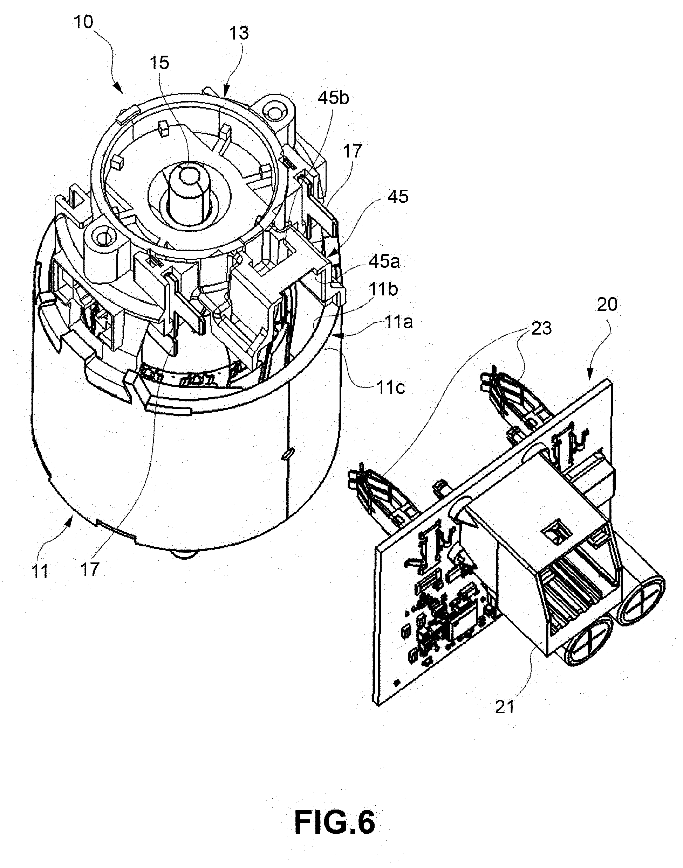

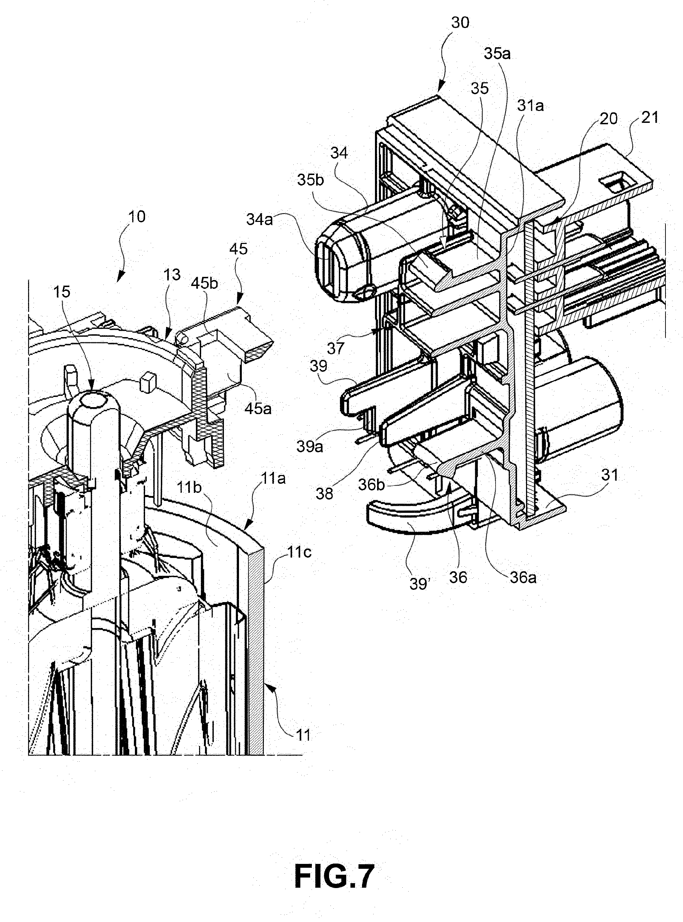

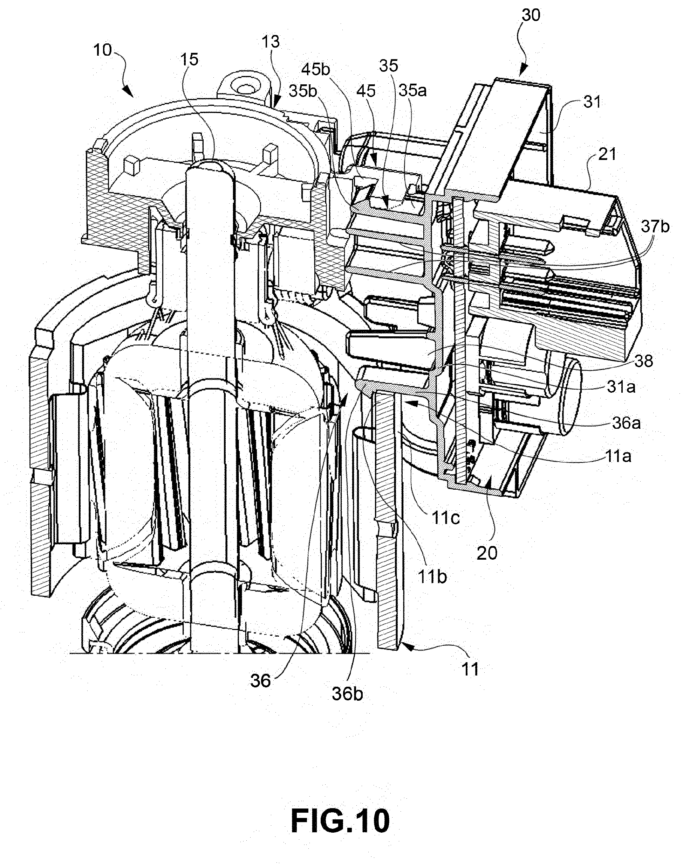

With reference to Fig. 3 to 10, an electronic control board is indicated as a whole with 20. This board is of the conventional type and may comprise, for example, a speed regulator. However, the circuit configuration of the electronic control board 20 is not essential for the purposes of the invention. The electronic control board 20 comprises a connector 21 configured to be connected to a control system (not shown), for example to the control system of an air conditioning unit of a vehicle. On the opposite face, the electronic control board 20 comprises a plurality of board terminals 23, shown in Fig. 6, which are configured to be coupled to the terminals 17 of the electric motor 10. In the illustrated example, the board terminals 23 are made as female terminals, and are two in number as are the male terminals.

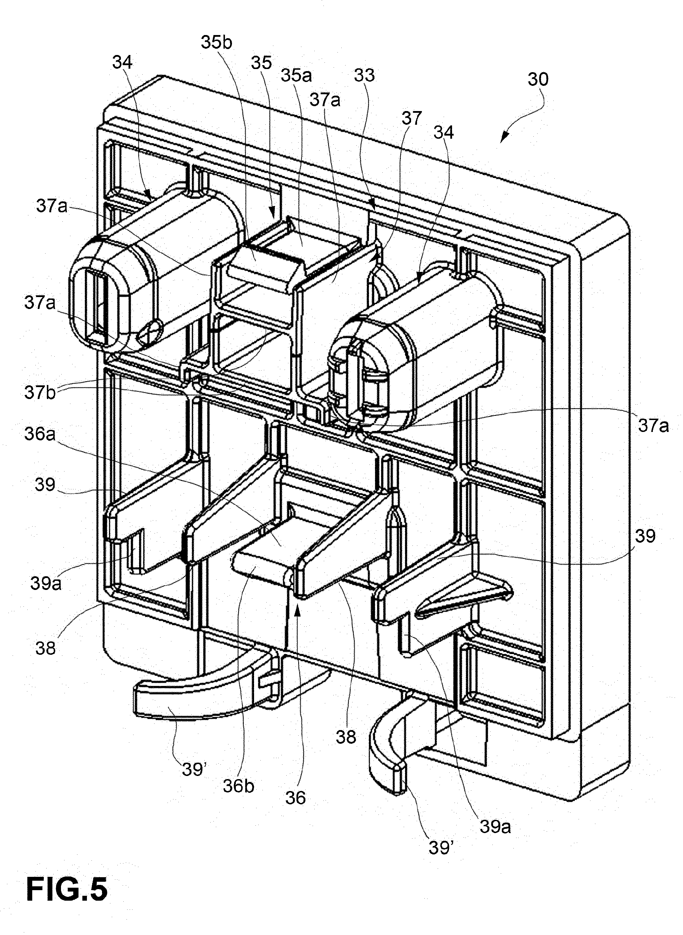

To allow direct mounting of the electronic control board 20 on the electric motor 10, a board holder is provided, indicated with 30 in the figures. In Fig. 5, the board holder 30 is shown alone, without the electronic control board.

The board holder 30 comprises a body made of plastic material, in particular a monolithic body, in which a seat 31 is formed, configured to receive the electronic control board 20, and made substantially as a tray. The electronic control board 20 may be attached to the seat 31 according to different methods known in the art, for example by snap, interference, by means of screws, etc. Preferably, the seat 31 is subjected to a potting process to embed the electronic control board 20 in a material so as to protect the electronic control board 20 from shocks and vibrations and to insulate the board with respect to water, humidity and corrosive agents.

On the board holder 30, on the side opposite to the seat 31, a coupling face 33 is formed, configured to be snap-fitted to the electric motor 10 and to establish an electrical connection between the motor terminals 17 and the electronic control board 20. The coupling face 33 is shown in particular in Fig. 5.

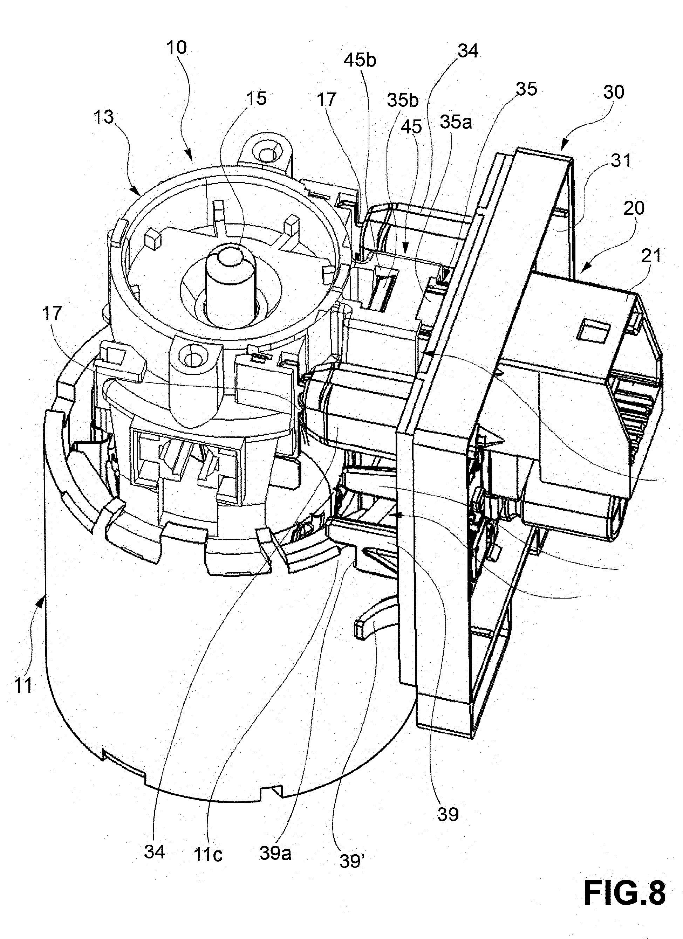

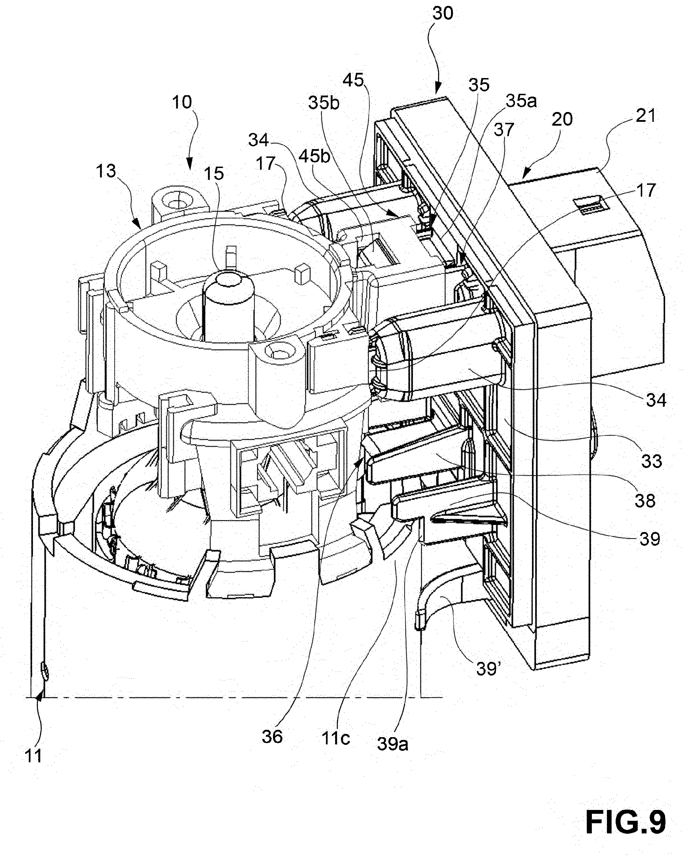

The coupling face 33 of the board holder 30 comprises hollow projections 34 configured to respectively accommodate the board terminals 23 of the electronic control board 20. The hollow projections 34 are therefore made as tubular projections which extend from the coupling face 33, and the inner cavities of which are in communication, through a bottom wall 31a of the seat 31, with the cavity of the seat 31 in which the electronic control board 20 is placed. The hollow projections 34 are provided with open ends 34a with windows configured to allow the insertion of the motor terminals 17 when the board holder 30 is assembled on the electric motor (see in particular Fig. 8 and 9). Preferably, a respective gasket is arranged inside each hollow projection 34 to prevent liquid penetration.

The coupling face 33 comprises a first snap tooth 35 protruding from the coupling face 33. In the illustrated example, the first snap tooth 35 is arranged between the hollow projections 34 and is equidistant therefrom. The first snap tooth 35 comprises a resilient tab 35a extending from the coupling face 33 and a toothed head 35b formed on the free end of the tab 35a.

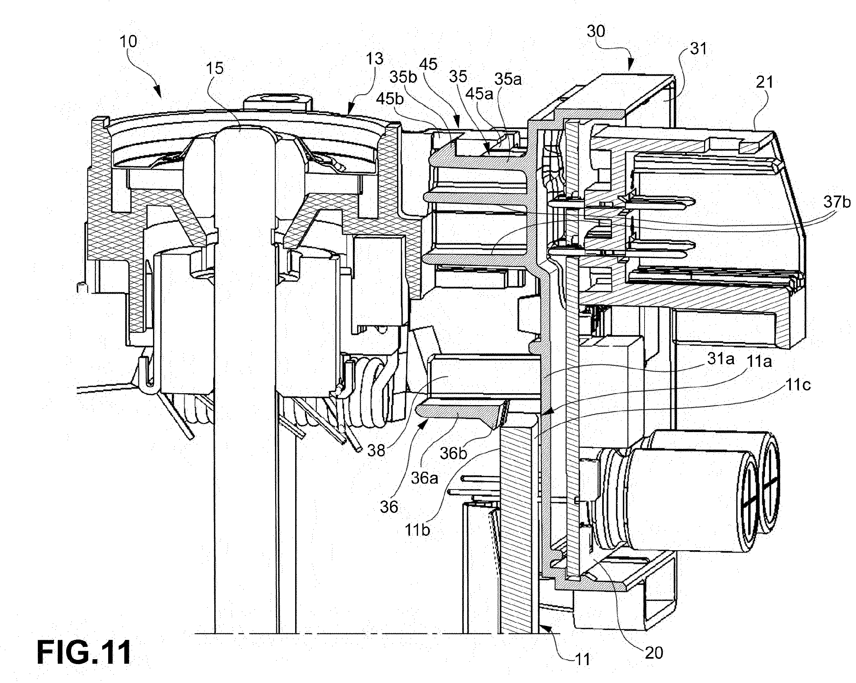

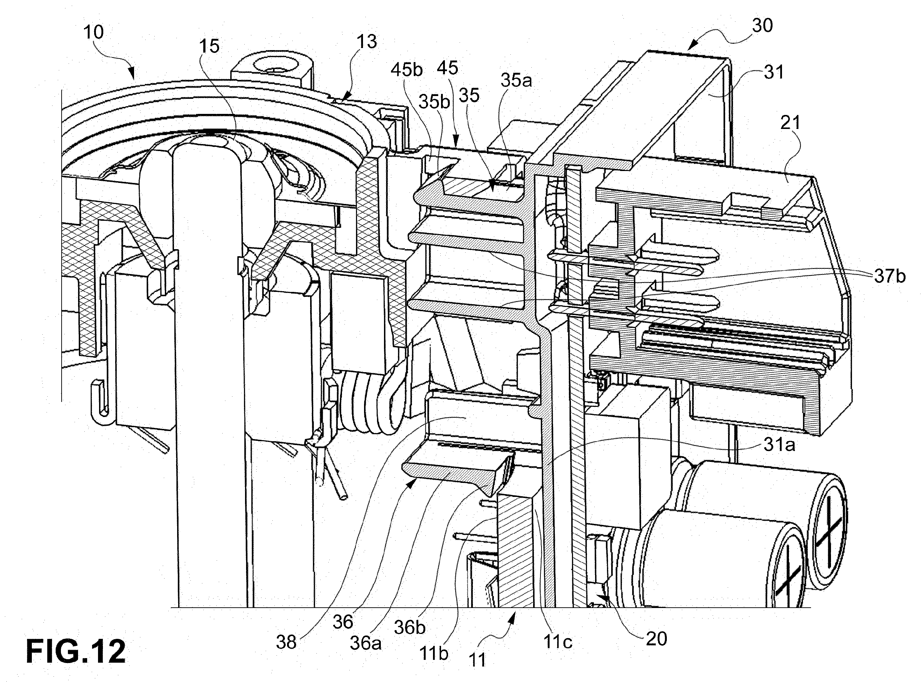

The coupling face 33 also comprises a second snap tooth 36 protruding from the coupling face 33. In the example of Fig. 1-10, this second snap tooth 36 comprises a resilient tab 36a extending from the coupling face 33 and a toothed head 36b obtained on the free end of the tab 36a. Fig. 11-12 show a variant where the second snap tooth 36 comprises a resilient tab 36a extending towards the coupling face 33 and a toothed head 36b obtained on the free end of the tab 36a.

The first and second snap tooth 35, 36 are opposite and aligned with each other in a direction parallel to the shaft 15 of the electric motor, which will be referred to hereinafter as the longitudinal direction. The first and second snap tooth 35, 36 are arranged facing away from each other, i.e., with the respective toothed ends 35b, 36b not facing each other.

The first snap tooth 35 is configured to engage - in the assembled condition - an anchoring formation 45 formed, in particular as a single piece, on the motor head 13. The anchoring formation 45 protrudes radially from the motor head 13 and is shaped so as to define a frontal seat 45a facing in a radial direction and a side window 45b facing in a longitudinal direction and communicating with the frontal seat 45a. In the illustrated example, the anchoring formation 45 is arranged between the motor terminals 17 and is equidistant therefrom.

In particular, in the assembled condition shown in Fig. 8-10 the tab 35a of the first snap tooth 35 is inserted in the frontal seat 45a of the anchoring formation 45 and the toothed head 35b of the first snap tooth 35 is inserted in the side window 45b, abutting against one edge of this window.

The second snap tooth 36 is configured to engage - in the assembled condition - an end edge 11a of the stator housing 11 adjacent to the motor head 13. In particular, in the assembled condition shown in Fig. 8-10 and 11-12 the toothed head 36b of the second snap tooth 36 abuts against a radially inner surface 11b of the terminal edge 11a of the stator housing 11. The snap tooth of the variant of Fig. 11-12 is configured to couple with a stator housing having a larger diameter than the stator housing engaged by the snap tooth of the example of Fig. 8-10.

The coupling face 33 of the board holder 30 further comprises a centering formation 37 projecting from the coupling face 33 and arranged adjacent to the first lock tooth 35. The centering formation 37 is configured to be inserted into the frontal seat 45a formed in the anchoring formation 45 of the motor head 13. The centering formation 37 comprises at least one longitudinal rib, i.e., extending in the longitudinal direction, and at least one transverse rib oriented orthogonally to the longitudinal rib. In the illustrated example, the centering formation comprises a lattice of longitudinal ribs 37a and transverse ribs 37b connected to each other and arranged in such a way as to define as a whole a shape (in the example, a sort of inverted T) having a cross section that matches the cross section of the frontal seat 45a of the anchoring formation 45.

The coupling face 33 of the board holder 30 further comprises at least one stand projection configured to rest on the edge 11a of the stator housing 11. In the illustrated example, two internal stand projections 38 adjacent to the second lock tooth 36 and two external stand projections 39 further away from the second lock tooth 36 are provided. The stand projections 38 and 39 are arranged on opposite sides of the coupling face 33 with respect to the second lock tooth 36. In the variant of Fig. 11-12, the root of the second lock tooth 36 is connected to the free end of the inner stand projections 38.

Each of the outer stand projections 39 also has a respective abutment surface 39a which - in the assembled condition - abuts against a radially outer surface 11c of the edge 11a of the stator housing 11. Thus, in the assembled condition, the abutment surfaces 39a cooperate with the second snap tooth 36 to tighten a wall of the edge 11a of the stator housing 11 between the second snap tooth 36 and the abutment surfaces 39a.

The coupling face 33 of the board holder 30 further comprises a pair of leaf spring projections 39' configured to engage the radially outer surface 11a, hereinafter also referred to as the side surface, of the stator housing 11. The leaf spring projections 39' are opposed to each other and extend from the coupling face 33 divergently from each other. In the assembled condition, the leaf spring projections 39' are subject to bending due to the effect of the engagement with the side surface 11c of the stator housing 11. The leaf spring projections 39' are arranged in a transverse alignment direction orthogonal to the longitudinal alignment direction of the first and second snap tooth 35, 36.

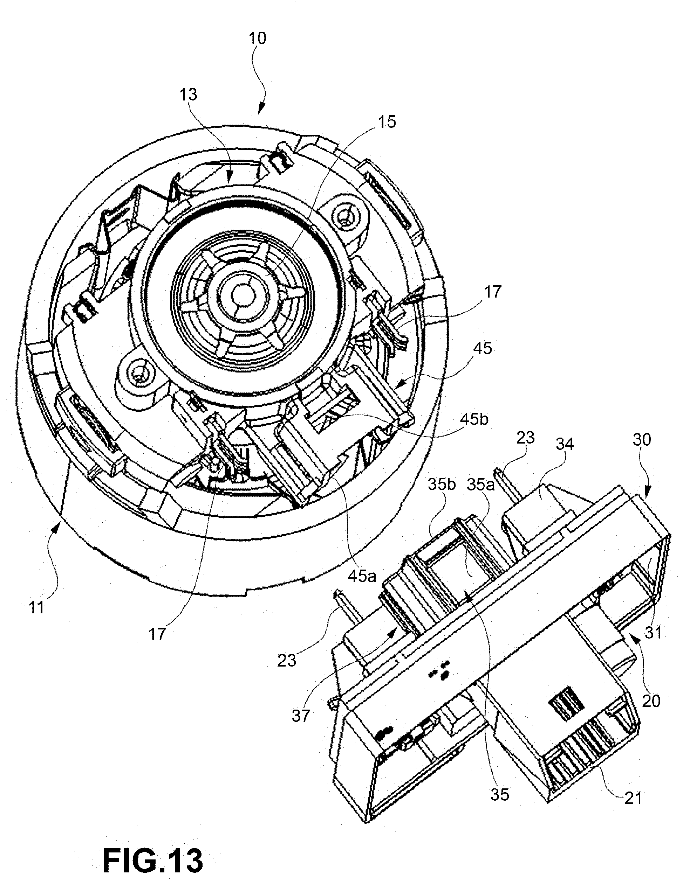

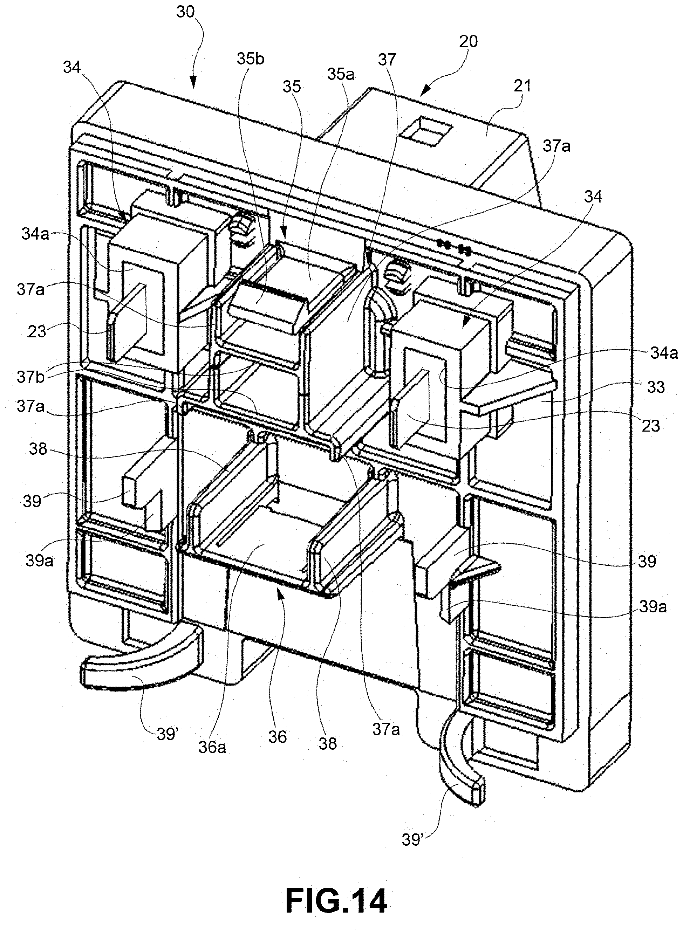

Fig. 13 and 14 show a variant in which the motor terminals 17 are made as female terminals and the board terminals 23 are made as male terminals. In this variant, the hollow projections 34 in which the board terminals 23 are received are made in such a way as to partially contain the board terminals 23, leaving an end portion of these terminals protruding outwards. On the other hand, in the preceding variants described above with reference to Fig. 1-11, the board terminals 23 were completely contained in the hollow projections 34 and did not protrude with respect thereto. The variant of Fig. 13 and 14 has an advantage in that it makes it easier to manufacture the gaskets which are intended to provide a seal inside the hollow projections 34.

## Claims

1. A configuration for mounting an electronic control board (20) on a brushed electric motor (10), said configuration comprising
a brushed electric motor (10), wherein said brushed electric motor comprises a cylindrical stator housing (11), a motor head (13) of plastic material fixed to the stator housing (11) and carrying brushes and relative brush holders, said motor head providing support for a shaft (15) of the electric motor (10), and a plurality of motor terminals (17) carried by the motor head (13) and connected to said brushes, and
a board holder (30) configured to support an electronic control board (20), said board holder comprising a body made of plastic material in which there is formed a seat (31) configured to receive the electronic control board (20), and on which there is formed, opposite to the seat (31), a coupling face (33) snap-fitted radially to the electric motor (10) to establish an electrical connection between the motor terminals (17) and the electronic control board (20),
wherein the coupling face (33) of the board holder (30) comprises hollow projections (34) configured to receive board terminals (23) of the electronic control board (20) and provided with open ends (34a) in which the motor terminals (17) are inserted,
wherein the coupling face (33) comprises a first snap tooth (35) protruding from the coupling face (33) and engaging an anchoring formation (45) formed on the motor head (13) and a second snap tooth (36) protruding from the coupling face (33) and engaging an edge (11a) of the stator housing (11),
and wherein the coupling face (33) further comprises at least one pair of leaf spring projections (39') configured to engage a side surface (1 1c) of the stator housing (11).

2. The configuration according to claim 1, wherein said first and second tooth are opposite to each other and facing away from each other.

3. The configuration according to claim 1 or 2, wherein the coupling face (33) further comprises a centering formation (37) protruding from the coupling face (33) and inserted in a seat (45a) formed in the anchoring formation (45) of the motor head (13).

4. The configuration according to claim 3, wherein the centering formation (37) comprises at least one longitudinal rib (37a) and at least one transverse rib (37b) oriented orthogonally to the longitudinal rib (37a).

5. The configuration according to any of the preceding claims, wherein the coupling face (33) further comprises at least one stand projection (38, 39) configured to rest on the edge (11a) of the stator housing (11).

6. The configuration according to claim 5, wherein said at least one stand projection has an abutment surface (39a) cooperating with the second snap tooth (36) to clamp a wall of the edge (11a) of the stator housing (11) between the second snap tooth (36) and the abutment surface (39a).

7. The configuration according to claim 6, wherein there are provided two abutment surfaces (39a) arranged on opposite sides of the coupling face (33) relative to the second snap tooth (36).

8. The configuration according to any of the preceding claims, wherein the leaf spring projections (39') are opposed to each other and extend from the coupling face (33) divergently from each other.

9. The configuration according to claims 8, wherein the leaf spring projections (39') are arranged according to an alignment direction orthogonal to an alignment direction of said first and second snap tooth (35, 36).

## Patentansprüche

1. Konfiguration zum Befestigen einer elektronischen Steuerungsplatine (20) an einem elektrischen Bürstenmotor (10), wobei die Konfiguration umfasst
einen elektrischen Bürstenmotor (10), wobei der elektrische Bürstenmotor ein zylindrisches Statorgehäuse (11), einen Motorkopf (13) aus Kunststoffmaterial umfasst, der am Statorgehäuse (11) befestigt ist und die Bürsten sowie die entsprechenden Bürstenhalter trägt, wobei der Motorkopf eine Lagerung für eine Welle (15) des Elektromotors (10) und eine Vielzahl von Motorklemmen (17), die durch den Motorkopf getragen werden und die mit den Bürsten verbunden sind, bereitstellt und
einen Platinenhalter (30), der konfiguriert ist, eine elektronische Steuerungsplatine (20) zu tragen, wobei der Platinenhalter einen Körper aus Kunststoffmaterial umfasst, in dem ein Sitz (31) ausgebildet ist, der konfiguriert ist, die elektronische Steuerungsplatine (20) aufzunehmen, und auf dem eine Kupplungsfläche (33) gegenüber dem Sitz (31) ausgebildet ist, die radial an dem Elektromotor Motor (10) einrastet, um eine elektrische Verbindung zwischen den Motorklemmen (17) und der elektronischen Steuerungsplatine (20) herzustellen,
wobei die Kupplungsfläche (33) des Platinenhalters (30) hohle Vorsprünge (34) umfasst, die konfiguriert sind, Platinenklemmen (23) der elektronischen Steuerungsplatine (20) aufzunehmen und die mit offenen Enden (34a) versehen sind, in die die Motorklemmen (17) eingeführt werden,
wobei die Kupplungsfläche (33) einen ersten Auslösezahn (35) umfasst, der aus der Kupplungsfläche (33) vorsteht und in einen am Motorkopf (13) ausgebildeten Verankerungsaufbau (45) eingreift, und einen zweiten Auslösezahn (36), der aus der Kupplungsfläche (33) vorsteht und in einen Rand (11a) des Statorgehäuses (11) eingreift,
und wobei die Kupplungsfläche (33) ferner mindestens ein Paar Blattfeder-Vorsprünge (39') umfasst, die konfiguriert sind, in eine Seitenfläche (11c) des Statorgehäuses (11) einzugreifen.

2. Konfiguration nach Anspruch 1, wobei der erste und der zweite Auslösezahn einander gegenüberliegen und voneinander weg weisen.

3. Konfiguration nach Anspruch 1 oder 2, wobei die Kupplungsfläche (33) ferner einen Zentrieraufbau (37) umfasst, der aus der Kupplungsfläche (33) vorsteht und in einen Sitz (45a) eingeführt wird, der in dem Verankerungsaufbau (45) des Motorkopfes (13) ausgebildet ist.

4. Konfiguration nach Anspruch 3, wobei der Zentrieraufbau (37) mindestens eine Längsrippe (37a) und mindestens eine Querrippe (37b) umfasst, die orthogonal zur Längsrippe (37a) ausgerichtet ist.

5. Konfiguration nach einem der vorhergehenden Ansprüche, wobei die Kupplungsfläche (33) ferner mindestens einen Stützvorsprung (38, 39) umfasst, der konfiguriert ist, auf dem Rand (11a) des Statorgehäuses (11) aufzuliegen.

6. Konfiguration nach Anspruch 5, wobei der mindestens eine Stützvorsprung eine Auflagefläche (39a) aufweist, die mit dem zweiten Auslösezahn (36) zusammenwirkt, um eine Wand des Randes (11a) des Statorgehäuses (11) zwischen dem zweiten Auslösezahn (36) und der Auflagefläche (39a) zu klemmen.

7. Konfiguration nach Anspruch 6, wobei zwei Auflageflächen (39a) vorgesehen sind, die auf gegenüberliegenden Seiten der Kupplungsfläche (33) in Bezug auf den zweiten Auslösezahn (36) angeordnet sind.

8. Konfiguration nach einem der vorhergehenden Ansprüche, wobei die Blattfeder-Vorsprünge (39') einander gegenüberliegen und sich von der Kupplungsfläche (33) in entgegengesetzte Richtungen erstrecken.

9. Konfiguration nach Anspruch 8, wobei die Blattfeder-Vorsprünge (39') gemäß einer Ausrichtungsrichtung angeordnet sind, die orthogonal zur Ausrichtungsrichtung des ersten und des zweiten Auslösezahns (35, 36) verläuft.

## Revendications

1. Une configuration de fixation d'une carte électronique de commande (20) sur un moteur électrique à balais (10), ladite configuration comprenant
un moteur électrique à balais (10), dans lequel ledit moteur électrique à balais comprend un boîtier statorique cylindrique (11), une tête de moteur (13) en matériau plastique fixée au boîtier statorique (11) et portant des balais ainsi que leurs supports relatifs, ladite tête de moteur fournissant un support pour un arbre (15) du moteur électrique (10), et une pluralité de bornes de moteur (17) portées par la tête de moteur (13) et connectées auxdits balais, et
un support de carte (30) configuré pour supporter une carte électronique de commande (20), ledit support de carte comprenant un corps en matériau plastique dans lequel est formé un siège (31) configuré pour recevoir la carte électronique de commande (20), et sur lequel est formée, en face du siège (31), une face de couplage (33) encliquetée radialement au moteur électrique (10) pour établir une connexion électrique entre les bornes du moteur (17) et la carte électronique de commande (20),
la face de couplage (33) du support de carte (30) comprenant des projections creuses (34) configurées pour recevoir des bornes de carte (23) de la carte électronique de commande (20) et comportant des extrémités ouvertes (34a) dans lesquelles les bornes du moteur (17) sont insérées,
la face de couplage (33) comprenant une première dent d'encliquetage (35) s'étendant de la face de couplage (33) et s'engageant dans une formation d'ancrage (45) formée sur la tête de moteur (13) et une deuxième dent d'encliquetage (36) s'étendant de la face de couplage (33) et s'engageant dans un bord (11a) du boîtier statorique (11),
et la face de couplage (33) comprenant en outre au moins une paire de projections à ressorts à lames (39') configurées pour s'engager sur une surface latérale (11c) du boîtier statorique (11).

2. La configuration selon la revendication 1, dans laquelle lesdites première et deuxième dent sont opposées l'une à l'autre et orientées dans des directions opposées.

3. La configuration selon la revendication 1 ou 2, dans laquelle la face de couplage (33) comprend en outre une formation de centrage (37) s'étendant de la face de couplage (33) et insérée dans un siège (45a) formé dans la formation d'ancrage (45) de la tête de moteur (13).

4. La configuration selon la revendication 3, dans laquelle la formation de centrage (37) comprend au moins une nervure longitudinale (37a) et au moins une nervure transversale (37b) orientée orthogonalement à la nervure longitudinale (37a).

5. La configuration selon l'une quelconque des revendications précédentes, dans laquelle la face de couplage (33) comprend en outre au moins une projection de support (38, 39) configurée pour reposer sur le bord (11a) du boîtier statorique (11).

6. La configuration selon la revendication 5, dans laquelle ladite au moins une projection de support comporte une surface d'appui (39a) coopérant avec la deuxième dent d'encliquetage (36) pour serrer une paroi du bord (11a) du boîtier statorique (11) entre la deuxième dent d'encliquetage (36) et la surface d'appui (39a).

7. La configuration selon la revendication 6, dans laquelle sont prévues deux surfaces d'appui (39a) disposées sur les côtés opposés de la face de couplage (33) par rapport à la deuxième dent d'encliquetage (36).

8. La configuration selon l'une quelconque des revendications précédentes, dans laquelle les projections à ressorts à lames (39') sont opposées l'une à l'autre et s'étendent de la face de couplage (33) en divergeant l'une de l'autre.

9. La configuration selon la revendication 8, dans laquelle les projections à ressorts à lames (39') sont disposées selon une direction d'alignement orthogonale à une direction d'alignement desdites première et deuxième dents d'encliquetage (35, 36).
